# EUROPÄISCHE PATENTSCHRIFT

(11) **EP 2 040 158 B1**
(45) Veröffentlichungstag und Bekanntmachung des Hinweises auf die Patenterteilung: **29.08.2012**
(21) Anmeldenummer: 08105357.1
(22) Anmeldetag: 16.09.2008
(51) Int. Cl.: G06F 3/16, B60R 16/037, B60W 50/14, G07C 7/00

(54) **Verfahren und Einrichtung zur Ausgabe von Informationen mittels Sprachausgabe**
Method and device for issuing information by means of voice output
Procédé et dispositif de sortie d'informations à l'aide d'une sortie vocale

(30) Priorität: 20.09.2007 DE 102007045147
(43) Veröffentlichungstag der Anmeldung: 25.03.2009
(73) Patentinhaber: Continental Automotive GmbH, 30165 Hannover (DE)
(72) Erfinder: Hardinge, Charles, 78052, Villingen-Schwenningen (DE); Lindinger, Andreas, 78658, Flözlingen (DE); Littwin, Jürgen, 78056, Villingen-Schwenningen (DE); Münch, Ulrich, 78083, Dauchingen (DE); Schmidt, Gunnar, 78052, Villingen-Schwenningen (DE)

(56) Entgegenhaltungen:
- EP-A2- 1 006 487
- WO-A1-2004/099721
- DE-A1- 10 338 566
- JP-A- 2005 351 648
- US-A1- 2006 028 323
- US-B1- 6 208 932

## Beschreibung

Gegenstand der Erfindung ist ein Verfahren nach Anspruch 1 und eine Einrichtung gemäß Anspruch 4.

In Kraftfahrzeugen und Lastkraftwagen werden Tachographen eingebaut und sind laut Verordnung verpflichtet, diverse Warnungen und Fehlermeldungen auf einem optischen Anzeigemedium zu visualisieren. In manchen Nutzfahrzeugen werden die Tachographen aber unter Umständen an Stellen installiert, wo eine Betrachtung des Displays schwierig wird bzw. den oder die Fahrer dazu zwingt, den Blick vom aktuellen Verkehrsgeschehen abzuwenden, um die Warnungen des Tachographen zu überprüfen. Dies führt zu einer erhöhten Unfallgefahr.

Bislang werden derartige Warnungen auf einem optischen Anzeigemedium des Tachographen angezeigt oder durch unterschiedliche Schnittstellen an die Bordelektronik zur Visualisierung auf einem weiteren Instrument übergeben.

Aus US 2006/0028323 A1 sind ein Verfahren und ein System bekannt, die den Austausch von Benachrichtigungen zwischen einem entfernten Ort und einem Motorfahrzeug ermöglichen. Dabei können Ton- und Bildschirmnachrichten zu dem Fahrzeug gesendet werden. In dem Fahrzeug sind neben einem Empfänger zum Empfangen von gesendeten Daten ferner für die empfangenen Nachrichten eine Anzeigeeinheit und eine Tonausgabeeinheit vorgesehen.

Das Dokument US 2006/0028323 A1 ist als nächstliegende Stand der Technik zu sehen.

Aufgabe der vorliegenden Erfindung ist es, einen Tachographen zu schaffen, welcher die diversen Warnungen und Fehlermeldungen auf andere Art und Weise oder zusätzlich auf andere Art und Weise wiedergibt, so dass die Unfallgefahr verringert wird.

Die Aufgabe wird gelöst mittels eines Verfahrens des Anspruchs 1 und eines Gegenstands des Anspruchs 4.

Bei dem erfindungsgemäßen Verfahren zur Ausgabe von Informationen mittels einer Vorrichtung zum Erstellen einer Sprachsequenz wird eine Information, welche normalerweise auf einem optischen Anzeigemedium ausgegeben wird, alleine (oder zusätzlich zum optischen Ausgabemedium) in Form einer Sprachsequenz vorgehalten. Die Anweisungen zur Ausgabe von Informationen werden dabei von einer Kontrolleinheit ausgegeben, welche eine Vielzahl von Anweisungen ausführen kann, wobei die Vielzahl eine Teilmenge von Anweisungen erhöhter Wichtigkeit umfasst.

Nicht alle Informationen sind von erhöhter Wichtigkeit, d. h. beinhalten Warnungen oder kritische Fehlermeldungen, welche zwangsläufig dem Fahrer oder den Fahrern oder den Benutzern einer derartigen Vorrichtung zur Verfügung gestellt werden müssen.

In einem ersten Schritt wird überprüft, ob die Anweisung der Teilmenge von Anweisungen erhöhter Wichtigkeit zugehörig ist. Ist dies der Fall, wird die Vorrichtung zum Erstellen einer Sprachsequenz aktiviert, wobei die Anweisung übergeben wird und die Information beinhaltet und/oder umschreibt.

Vorteilhafterweise wird die Information zusätzlich auf dem optischen Anzeigemedium dargestellt.

Dadurch, dass die Information, welche normalerweise vom Fahrer durch Ablesen ermittelt werden muss, nun (auch) durch Sprachausgabe wiedergegeben wird, muss der Fahrer seine visuelle Aufmerksamkeit dem Straßenverkehr nicht länger entziehen.

Vorteilhafterweise weist die Vorrichtung zum Erstellen der Sprachsequenz eine Einheit zum Erstellen einer Text- und/oder Befehlssequenz auf und eine weitere Einheit zum Umwandeln der Text- und/oder Befehlssequenz in eine Sprachsequenz, wobei die weitere Einheit und die Einheit miteinander verbunden oder über eine Schnittstelle miteinander verbindbar sind. Dies bedeutet insbesondere, dass die beiden Einheiten in verschiedenen Vorrichtungen untergebracht sein können. Mittels der Schnittstelle werden Informationen hinsichtlich der Text- und/oder Befehlssequenz an eine weitere Einheit übergeben, welche aus der Text- und/oder Befehlssequenz eine Sprachsequenz bildet. Diese kann wiederum in einem weiteren Gerät und/oder demselben und/oder dem ersten Gerät ausgegeben werden.

Besonders vorteilhaft ist es, wenn die Teilmenge von Anweisungen Warnmeldungen umfasst. Auf diese Weise wird die Aufmerksamkeit eines Fahrers bzw. der Fahrer nur dann beansprucht, wenn die Information für das Führen des Fahrzeugs von erhöhter Wichtigkeit ist.

Besonders vorteilhafterweise ist in dem Verfahren ein Tachograph vorhanden, welcher zumindest die Kontrolleinheit und einen Teil der Vorrichtung zum Erstellen der Sprachsequenz aufweist. In Fahrtenschreibern bzw. Tachographen laufen eine Vielzahl von Informationen aus der Bordelektronik und das Fahrverhalten des Fahrers betreffend zusammen. Das heißt, dass insbesondere eine Vielzahl von Warnungen und Fehlermeldungen in dem Fahrtenschreiber bzw. Tachographen bereits ermittelbar ist und somit lediglich eine Teilmenge von Anweisungen ausgewählt werden muss, welche sinnvollerweise auch und/oder ausschließlich mittels einer Sprachausgabe übermittelt werden. Sprachausgabe bedeutet in diesem Fall, dass entweder die Meldung, welche auf dem optischen Anzeigemedium dargestellt wird, direkt ausgesprochen wird oder der Inhalt der Warnmeldung ausformuliert oder verkürzt wiedergegeben wird. Auch ist es möglich, dass die Sprachausgabe auf eine Handlungsalternative zum Reagieren auf die Warnmeldung oder Fehlermeldung hinweist.

Gegenstand der Erfindung ist ebenfalls eine Einrichtung zur Ausgabe von Informationen, welche eine Kontrolleinheit mit einer Vielzahl von Anweisungen und ein optisches Anzeigemedium zur Darstellung von Informationen aufweist und eine Teilmenge der Vielzahl von Anweisungen von erhöhter Wichtigkeit ist. Die Anweisungen haben unter anderem die Ausgabe der Informationen zur Folge.

Dadurch, dass der Kontrolleinheit eine Vorrichtung zum Erstellen einer Sprachsequenz zugeordnet ist, können die Anweisungen von erhöhter Wichtigkeit mittels der Vorrichtung und einer der Einrichtung zugeordneten Schaltung mittels Sprachausgabe wiedergegeben werden, so dass der Fahrer bzw. der Benutzer des Nutzfahrzeuges oder Kraftfahrzeuges seine visuelle Aufmerksamkeit dem Straßenverkehr nicht entziehen muss. Dabei leitet die Schaltung aufgrund einer Anweisung die Erstellung einer Sprachsequenz ein, wenn die Anweisung aus der Teilmenge ist, wobei die Sprachsequenz eine der Anweisung zugeordnete Information beinhaltet und/oder umschreibt.

Vorteilhafterweise ist die Information zudem auf dem optischen Anzeigemedium dargestellt.

Besonders vorteilhafterweise wird die Teilmenge von Anweisungen mittels einer Datenbank gespeichert. Insbesondere ist diese Datenbank durch Updates, wie z. B. Firmware-Updates, ergänzbar und veränderbar und kann sich so den wechselnden gesetzlichen Anordnungen bezüglich diverser Warnungen und Fehlermeldungen anpassen. Zudem können auch Veränderungen der Software der Einrichtung oder zusätzliche Anweisungen in der Datenbank hinterlegt werden.

Vorteilhafterweise ist ein Teil der Vorrichtung zur Erstellung der Sprachsequenz in einem Tachographen angeordnet und ein weiterer Teil in einem Radio und/oder Navigationsgerät und/oder PDA angeordnet. Auf diese Weise können die baulichen Veränderungen am Tachographen auf ein Minimum reduziert werden, da bereits vorhandene funktionelle Bausteine zur Sprachausgabe, welche in einem Radio oder einem Navigationsgerät oder einem PDA bereits vorhanden sind, mittels einer geeigneten Schnittstelle verwendet werden können.

Alternativ kann auch die gesamte Vorrichtung zur Herstellung der Sprachsequenz in einem Tachographen angeordnet sein. Hier ist der Vorteil einer kompakten Bauweise und der Unabhängigkeit von weiteren Geräten gegeben.

In einer weiteren vorteilhaften Ausführung weist die Vorrichtung zur Erstellung der Sprachsequenz eine Einheit zur Erstellung einer Text- und/oder Befehlssequenz und eine weitere Einheit zur Umwandlung der Text- und/oder Befehlssequenz in eine Sprachsequenz auf. Dabei müssen beide Einheiten nicht in einem Gerät untergebracht sein. Der Vorteil ist die funktionale Aufteilung von Wesensmerkmalen in möglicherweise unterschiedlichen Gerätschaften, was einer serviceorientierten Architektur nahekommt.

Weitere vorteilhafte Ausführungen sind in den Ansprüchen unter weiteren Beschreibungen beschrieben.

Im Folgenden soll die Erfindung anhand einiger Ausführungsbeispiele genauer beschrieben werden. Es zeigen
- Fig. 1: Tachograph mit eingebauter Sprachausgabe;
- Fig. 2: Tachograph mit externer Sprachausgabe;
- Fig. 3: Tachograph mit externer Audiogenerierung und Sprachausgabe.

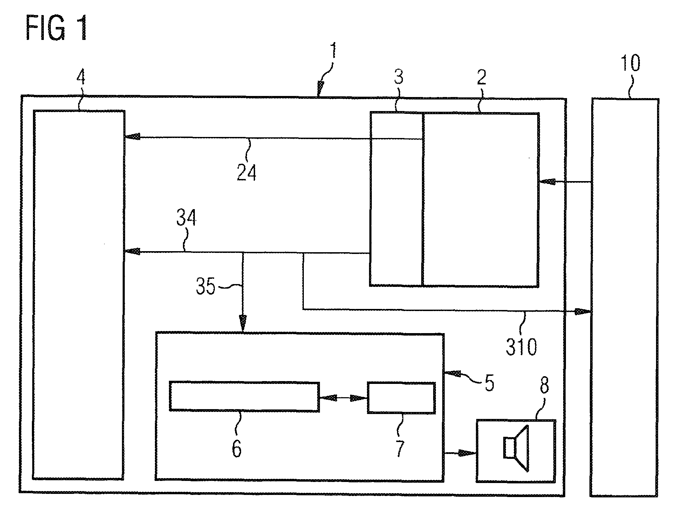

Die Fig. 1 zeigt ein schematisches Bild eines Tachographen 1. Der Tachograph 1 weist eine Steuereinheit 2, einen Filter 3, ein optisches Anzeigemedium 4, eine Vorrichtung zum Erstellen einer Sprachsequenz 5 und eine Lautsprecher-Verstärkereinheit 8 auf. Die Vorrichtung zum Erstellen einer Sprachsequenz 5 weist zudem eine Audioanweisungskontrolleinheit 6 und einen Audiodatenspeicher 7 auf. Der Tachograph 1 ist zudem mit einer Bordelektronik 10 verbunden. Für gewöhnlich weisen Tachographen oder auch Fahrtenschreiber eine weitere Vielzahl von Elementen und Funktionen auf, welcher der Übersichtlichkeit halber hier nicht im Weiteren aufgeführt wird.

Die Steuereinheit 2 des Tachographen 1 kann unter anderem eine Kontrolleinheit, einen Zentralprozessor und einen Datenspeicher aufweisen. Als Speichermedien bieten sich hierbei RAM- oder ROM-Module bzw. Flashspeichermedien an. Es ist jedoch auch denkbar, dass der Speicher auf einer Hardware selbst implementiert ist, d. h. unveränderbar in der Kontrolleinheit oder dem Zentralprozessor der Steuereinheit 2 vorliegt.

Die Steuereinheit 2 hat unter anderem die Aufgabe, Informationen, welche durch die Bordelektronik 10 übermittelt werden, in Anweisungen für den Tachographen 1 umzusetzen bzw. mithilfe der Informationen oder Daten der Bordelektronik eine Vielzahl von Anweisungen oder neuen Daten zu generieren, wozu wiederum Anweisungen notwendig sind. Diese Anweisungen können sowohl die visuelle Ausgabe von Informationen auf dem optischen Anzeigemedium 4 bewirken als auch die Dokumentation der Fahrdaten auf einer Chipkarte oder einer Fahrtschreibenkarte. Unter den Anweisungen, welche durch die Steuereinheit 2 oder eines ihrer Bestandteile ausgeführt werden können, befindet sich insbesondere eine Teilmenge von Anweisungen erhöhter Wichtigkeit, welche von großer Bedeutung für die sichere Führung eines Fahrzeugs sein können. Derartige Anweisungen codieren beispielsweise Informationen bezüglich der maximal erlaubten Fahrzeit bzw. der maximal erlaubten Höchstgeschwindigkeit oder andere Überschreitungen von gesetzlichen Standards, welche durch die Bordelektronik ermittelt werden können.

Mithilfe eines an der Steuereinheit 2 angeordneten Filters 3 wird überprüft, ob eine Anweisung auch in Bezug auf eine Sprachausgabe von erhöhter Wichtigkeit ist oder nicht. Dabei kann der Filter 3 durch eine Datenbank gebildet werden, welche die Teilmenge von Anweisungen enthält, oder durch das Anbringen von logischen Gattern, welche ebenfalls die Teilmenge von Anweisungen erhöhter Wichtigkeit herausfiltern können.

Im Falle, dass eine Anweisung der Steuereinheit 2 nicht von erhöhter Wichtigkeit ist, jedoch auf dem optischen Anzeigemedium 4 dargestellt werden soll, wird diese als normale Anweisung 24 von der Steuereinheit 2 zum optischen Anzeigemedium 4 übertragen. Die normale Anweisung kann dabei beispielsweise in einen ASCII-Text oder eine Befehlssequenz umgewandelt werden, welche direkt oder nach einer Formatierung auf dem optischen Anzeigemedium 4 ausgegeben werden können. Als optisches Anzeigemedium 4 bieten sich hierbei LC-Displays, Diodendisplays oder analoge Displays an.

Im Falle, dass der Filter 3 eine Anweisung als eine Anweisung erhöhter Wichtigkeit identifiziert, kann diese als Anweisung erhöhter Wichtigkeit 34 ebenfalls auf dem optischen Anzeigemedium 4 dargestellt werden. Die erhöhte Wichtigkeit kann dabei dadurch zustande kommen, dass das optische Anzeigemedium 4 ein Blinksignal oder eine Farbänderung im Display aufweist, so dass eine visuelle Änderung zur normalen Anweisung gegeben ist und ein Fahrer bzw. Benutzer des Tachographen auf die Änderung aufmerksam wird.

Der Kerngedanke der Erfindung ist es, dass dem Fahrer bzw. Benutzer des Tachographen 1 eine zusätzliche Möglichkeit der Informationsaufnahme von Anweisungen erhöhter Wichtigkeit an die Hand gegeben wird, ohne die Sicherheit des Kraftfahrzeuges oder des Lastkraftwagens im Verkehr zu beeinträchtigen. In diesem Falle wird die Anweisung erhöhter Wichtigkeit 35 (welche mit der Anweisung 34 identisch ist) an eine Vorrichtung zum Erstellen einer Sprachsequenz übergeben.

Die Anweisung erhöhter Wichtigkeit 35 wird dabei an die Audioanweisungskontrolleinheit 6 übergeben, welche mithilfe der Anweisung 35 direkt auf einen Audiodatenspeicher 7 zugreifen kann, wobei die Anweisung codiert, welche Audiodaten aus dem Audiodatenspeicher 7 abgerufen werden sollen. Dies kann beispielsweise bedeuten, dass der Text, welcher auf dem optischen Anzeigemedium aufgrund der Anweisung erhöhter Wichtigkeit 34 ausgegeben wird, mittels der Anweisung erhöhter Wichtigkeit 35 als Sprache direkt ausgegeben wird. Hierbei codiert die Anweisung 35 selbst die aus dem Audiodatenspeicher 7 mittels der Audioanweisungskontrolleinheit 6 bezogenen Audiodaten. Die Audiodaten können dabei in Form von ganzen Sätzen oder einer Ansammlung von einzelnen Wörtern vorliegen, welche gemäß der Anweisung 35 mittels der Audioanweisungskontrolleinheit 6 ausgelesen werden. Nachdem aufgrund der Anweisung 35 die Audioanweisungskontrolleinheit 6 eine Sprachsequenz mithilfe des Audiodatenspeichers 7 generiert hat, wird diese Sprachsequenz an eine im Tachographen integrierte Lautsprecher-Verstärkereinheit 8 übergeben. Diese gibt die für den Fahrer oder Benutzer des Tachographen 1 zu hörende Sprachsequenz aus.

Es ist denkbar, dass die Vorrichtung zum Erstellen einer Sprachsequenz 5 die Audioanweisungskontrolleinheit 6 und den Audiodatenspeicher 7 in einem Bauteil zusammenfasst bzw. noch eine Vielzahl von weiteren Bauteilen aufweist. Zudem ist es möglich, dass der Tachograph keinen Lautsprecher, sondern nur einen Verstärker aufweist, welcher mit einem normalen Fahrzeuglautsprecher verbunden werden kann. Dies würde zu einer Verringerung der notwendigen Bauteile im Tachographen 1 führen. Weiterhin ist es denkbar, dass die Anweisung erhöhter Wichtigkeit auch zurück an die Bordelektronik 10 mittels der Verbindung 310 überführt wird.

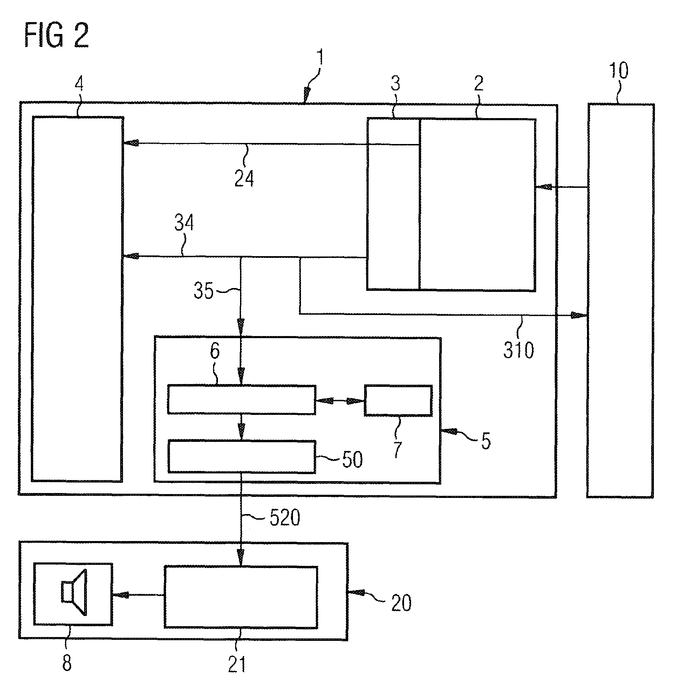

In der Fig. 2 wird ein Tachograph 1 gezeigt, welcher in einer Vielzahl von Funktionen mit dem Tachographen 1 der Fig. 1 übereinstimmt. Änderungen ergeben sich lediglich innerhalb der Vorrichtung zum Erstellen einer Sprachsequenz 5, welche dazu führen, dass ein weiteres externes Gerät 20 zur externen Audioausgabe vorhanden ist. Aus diesem Grund werden lediglich die Vorrichtung zum Erstellen einer Sprachsequenz 5 und die Funktionen des externen Audioausgabegerätes 20 beschrieben. Wird der Vorrichtung 5 zum Erstellen einer Sprachsequenz eine Anweisung erhöhter Wichtigkeit 35 übergeben, so wird diese von einer Audioanweisungskontrolleinheit 6 angenommen und mittels einer Audiodatenbank 7 Audiodaten in der richtigen Reihenfolge zusammengestellt bzw. durch die Audioanweisungskontrolleinheit 6 generiert. Die fertige Audiodatei, welche die Sprachsequenz enthält, wird anschließend von der Audioanweisungskontrolleinheit 6 an einen Interpreter 50 übergeben, wobei es die Aufgabe des Interpreters ist, die Audiodaten in eine Form zu bringen, welche mit dem Audioausgabeformat eines externen Audioausgabegerätes 20 übereinstimmt. Beispielsweise kann der Interpreter 50 ein Radiosender mit geringer Stärke auf einem bestimmten Frequenzband im FM- oder AM-Bereich sein, welcher die Audiodaten moduliert und mittels einer Antenne an das Radio, welches in diesem Falle das externe Audioausgabegerät 20 darstellt, übersendet. Die Datenverbindung zwischen dem Interpreter 50 und dem externen Audioausgabegerät 20 wären somit Funkwellen 520. Es ist jedoch ebenso denkbar, dass der Interpreter 50 die Daten unverändert lässt und mittels einer physischen Verbindung, sei es Kabel oder Leiterbahnen, an ein externes Audioausgabegerät 20 weiterleitet. Der Interpreter 50 kann jedoch auch die Audiodaten in ein Format wandeln, welches durch das externe Audioausgabegerät 20 ausgebbar ist, und zudem den Audiodaten eine Befehlssequenz hinzufügen, mit welcher eine externe Steuereinheit 21 des externen Audioausgabegerätes 20 Anweisungen erhält, was mit den Audiodaten zu tun ist. Die externe Steuereinheit 21 übergibt die Audiodaten dann an die in ihr liegende Lautsprecher-Verstärkereinheit 8.

Als externes Audioausgabegerät 20 können hier beispielsweise ein Personal Digital Assistant (PDA) oder ein Navigationsgerät zum Einsatz kommen, da diese oftmals bereits in der Lage sind, Audiodaten wiederzugeben. Die Audiodaten müssten durch die Vorrichtung zum Erstellen einer Sprachsequenz 5 lediglich in einem Format vorgehalten werden, welches der PDA oder das Navigationsgerät ausgeben kann. Auf diese Weise könnte auf eine eigene Lautsprecher-Verstärkereinheit 8 im Tachographen 1 verzichtet werden. Des Weiteren könnten weitere Bauteile im Tachographen eingespart werden, da diese in gängigen handelsüblichen PDAs und Navigationsgeräten bereits vorhanden sind.

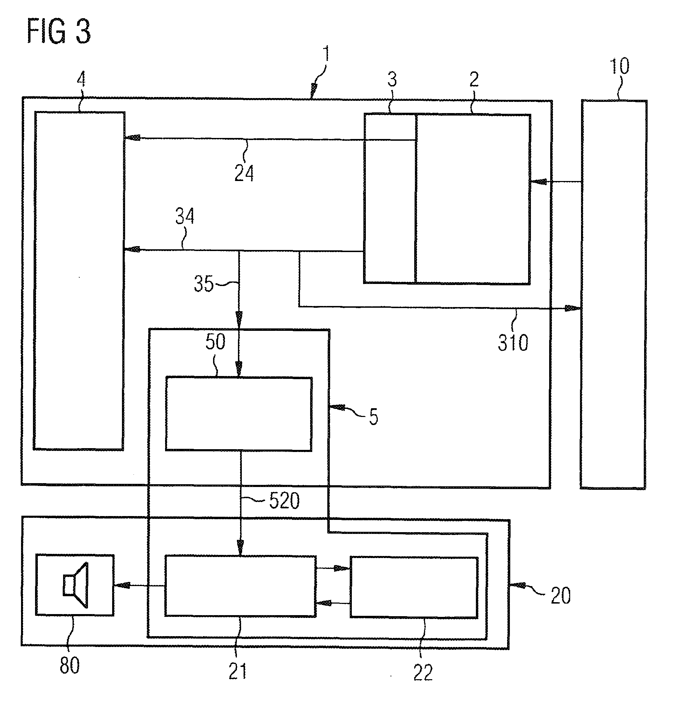

Eine weitere Reduktion von Bauteilen innerhalb des Tachographen 1 lässt sich dem schematischen Tachographen der Fig. 3 entnehmen. Hierbei ist zu beachten, dass die Vorrichtung einer Sprachsequenz 5 sich konzeptionell nicht länger nur innerhalb des Tachographen 1 befindet, sondern sich zusätzlich über einen Teil des externen Audioausgabegerätes 20 erstreckt. Als Teil der Vorrichtung zum Erstellen einer Sprachsequenz 5 innerhalb des Tachographen 1 ist lediglich ein Interpreter 50 vorhanden. Dieser nimmt die Anweisung erhöhter Wichtigkeit 35 an, welche beispielsweise als ASCII-Zeichenstring oder Anweisungssequenz vorliegt, und wandelt diese in einen ASCII-Zeichenstring oder eine Anweisungs- bzw. Befehlssequenz, welche durch die externe Steuereinheit 21 des externen Audioausgabegerätes 20 interpretierbar ist. In dem externen Audioausgabegerät 20 ist die Fähigkeit zur Erzeugung von Sprachsequenzen bereits vorhanden. Dies ist beispielsweise aus PDAs oder Navigationsgeräten wohlbekannt. Diese Geräte besitzen eine interne Datenbank mit internem Speicher, welcher Audioanweisungen in Form von Sätzen oder Wörtern vorhält, welche gemäß einer Anweisung der externen Steuereinheit 21 über die eingebaute Lautsprecher-Verstärkereinheit 80 ausgegeben werden. Erreicht die externe Steuereinheit 21 eine Befehls- oder Anweisungssequenz bzw. ein ASCII-Zeichenstring über die Datenverbindung 520, überprüft die externe Steuereinheit die ankommenden Informationen und bezieht aus seinem eigenen externen Audiospeicher 22 die notwendigen Daten zum Erstellen der Sprachsequenz gemäß der Anweisung erhöhter Wichtigkeit 35. Diese Sprachsequenz wird anschließend über die Lautsprecher-Verstärkereinheit 80 ausgegeben.

Bei einer Ausführung eines Tachographen gemäß dem Tachographen 1 der Fig. 3 muss lediglich ein Interpreter in Form eines elektronischen Bauteils am Tachographen angebracht werden, wobei der Interpreter die Anweisungen derart aufbereitet, dass sie für ein externes Audioausgabegerät lesbar sind und das externe Audioausgabegerät 20 mittels seines eigenen Audiospeichers bzw. Audiodatenbank 22 die Sprachsequenz mittels des Anweisungsbefehlssatzes bzw. ASCII-Zeichenstrings erstellen kann. Der Interpreter 50 beinhaltet in diesem Falle lediglich eine Schnittstelle und übersetzt die Anweisungen des Tachographen 1 in eine für das externe Audioausgabe 20 verständliche Anweisungssprache. Der Tachograph 1 der Fig. 3 ist deswegen vorteilhaft, weil nur wenige zusätzliche Bauteile im Tachographen 1 angebracht werden müssen.

Es ist auch denkbar, dass die Datenverbindung für Anweisungen von erhöhter Wichtigkeit von der Steuereinheit zur Bordelektronik 310 als Schnittstelle zu einem externen Audioausgabegerät 20 benutzt werden. Auch hier ist jedoch das Vorhandensein eines Interpreters 50 wichtig, damit das externe Audioausgabegerät 20 die Anweisungen des Tachographen umsetzen und eine Sprachsequenz generieren kann. In der Fig. 3 erstreckt sich die Vorrichtung zum Erstellen einer Sprachsequenz 5 über den Tachographen 1 und das externe Audioausgabegerät 20. Dass diese voneinander beabstandet sein können und lediglich durch eine Datenverbindung 520 in Form von Radio, Funk oder physischen Verbindungen verbunden sind, sei an diese Stelle nochmals ausdrücklich erwähnt.

Als Informationen, welche sowohl ausschliesslich als Sprachsequenz oder zusätzlich zur optischen Darstellung als Sprachsequenz ausgegeben werden können, sind auch Informationen hinsichtlich des Betriebes eines Tachographen oder Fahrtenschreibers, wie beispielsweise Hinweise hinsichtlich einer ablaufenden Chipkarte für den Tachographen, oder eine Information hinsichtlich der Bedienung des Tachographen oder der Überprüfung der Gültigkeit einer auf einem Zugangsmedium, wie z. B. einer Chipkarte, vermerkten Betriebsberechtigung des Fahrers, vorstellbar.

## Patentansprüche

1. Verfahren zur Ausgabe von Informationen mittels einer Vorrichtung zum Erstellen einer Sprachsequenz (5), wobei die Vorrichtung zum Erstellen der Sprachsequenz (5) eine Einheit zum Erstellen einer Text- und/oder Befehlssequenz (6, 50) und eine weitere Einheit zum Umwandeln der Text- und/oder Befehlssequenz in eine Sprachsequenz (6, 50; 21, 22) aufweist, wobei die Einheit und die weitere Einheit miteinander verbunden sind oder über eine Schnittstelle miteinander verbindbar sind, wobei die Vorrichtung mit einer Kontrolleinheit (2) verbunden ist, durch welche eine Vielzahl von Anweisungen (24) ausführbar ist und die Vielzahl eine Teilmenge von in einer Datenbank (3) gespeicherten Anweisungen erhöhter Wichtigkeit (34, 35) enthält, wobei ein Tachograph (1) vorhanden ist, welcher zumindest die Kontrolleinheit (2), die Datenbank (3) und einen Teil der Vorrichtung zur Erstellung der Sprachsequenz (5) aufweist, welches folgende Schritte umfasst:
a) Anweisung der Kontrolleinheit zur Ausgabe einer Information und Überprüfung, ob die Anweisung der Teilmenge von Anweisungen (35) zugehörig ist;
b) Aktivierung der Vorrichtung zum Erstellen einer Sprachsequenz (5) mittels der zur Teilmenge gehörenden Anweisung (35), wobei die Sprachsequenz die Information beinhaltet und/oder umschreibt;
c) Ausgeben der Sprachsequenz.

2. Verfahren nach Anspruch 1, **dadurch gekennzeichnet, dass** die Information zusätzlich auf einem optischen Anzeigemedium dargestellt wird.

3. Verfahren nach einem der vorhergehenden Ansprüche, **dadurch gekennzeichnet, dass** die Teilmenge von Anweisungen (34, 35) Warnmeldungen umfassen.

4. Einrichtung zur Ausgabe von Informationen, welche eine Kontrolleinheit (2) mit einer Vielzahl von Anweisungen (24), welche die Ausgabe der Informationen anweisen, und ein optisches Anzeigemedium (4) zur Darstellung von Informationen aufweist und eine Teilmenge der Vielzahl von Anweisungen von erhöhter Wichtigkeit (34, 35) ist, wobei der Kontrolleinheit eine Vorrichtung zum Erstellen einer Sprachsequenz (5) zugeordnet ist, wobei die Vorrichtung zur Erstellung der Sprachsequenz (5) eine Einheit zur Erstellung einer Text- und/oder Befehlssequenz aufweist, und eine weitere Einheit zur Umwandlung der Text- und/oder Befehlssequenz in eine Sprachsequenz zugeordnet ist, und eine Schaltung (6) vorhanden ist, welche aufgrund einer Anweisung eine Erstellung einer Sprachsequenz einleitet, wenn die Anweisung aus der Teilmenge ist, wobei die Sprachsequenz eine der Anweisung zugeordnete Information beinhaltet und/oder umschreibt, **dadurch gekennzeichnet, dass** die Einrichtung eine Datenbank (3) aufweist, in der die Teilmenge der Vielzahl von Anweisungen von erhöhter Wichtigkeit (34, 35) gespeichert ist, wobei die Kontrolleinheit (2), die Datenbank (3) und zumindest ein Teil der Vorrichtung zur Erstellung der Sprachsequenz (5) in einem Tachographen (1) angeordnet sind und ein weiterer Teil in einem Radio (20) oder Navigationsgerät (20) oder PDA (20) angeordnet ist.

5. Einrichtung nach Anspruch 4, **dadurch gekennzeichnet, dass** die Information auf dem optischen Anzeigemedium (4) dargestellt ist.

6. Einrichtung nach einem der Ansprüche 4 oder 5, **dadurch gekennzeichnet, dass** die Vorrichtung zum Erstellen einer Sprachsequenz (5) mit einem Lautsprecher (8, 80) zur Ausgabe der Sprachsequenz verbindbar ist.

## Claims

1. Method for the output of information by means of an apparatus (5) for creating a voice sequence, wherein the apparatus (5) for creating the voice sequence comprises a unit (6, 50) for creating a text sequence and/or command sequence and a further unit (6, 50; 21, 22) for converting the text sequence and/or command sequence into a voice sequence, wherein the unit and the further unit are connected to one another or can be connected via an interface to one another, wherein the apparatus is connected to a control unit (2), by means of which a multiplicity of instructions (24) can be executed, and said multiplicity contains a subset of instructions (34, 35) of heightened importance stored in a database (3), wherein a tachograph (1) is present that comprises at least the control unit (2), the database (3) and part of the apparatus (5) for creating the voice sequence, said method comprising the following steps:
a) instructing the control unit to output a piece of information and to check whether the instruction belongs to the subset of instructions (35);
b) activating the apparatus (5) for creating a voice sequence by means of the instruction (35) belonging to the subset, wherein the voice sequence contains and/or transcribes the information;
c) outputting the voice sequence.

2. Method according to claim 1, **characterized in that** the information is additionally displayed on a visual display medium.

3. Method according to any of the preceding claims, **characterized in that** the subset of instructions (34, 35) comprises warning messages.

4. Device for the output of information, said device comprising a control unit (2) having a multiplicity of instructions (24), which instruct the output of information, and comprising an optical display medium (4) for displaying information, and a subset of the multiplicity of instructions (34, 35) is of heightened importance, wherein an apparatus (5) for creating a voice sequence is assigned to the control unit, wherein the apparatus (5) for creating the voice sequence comprises a unit for creating a text sequence and/or command sequence, and a further unit for converting the text sequence and/or command sequence into a voice sequence is assigned, and a circuit (6) is present that initiates a creation of a voice sequence on the basis of an instruction if the instruction is part of the subset, wherein the voice sequence contains and/or transcribes a piece of information assigned to the instruction, **characterized in that** the device comprises a database (3), in which the subset of the multiplicity of instructions (34, 35) of heightened importance is stored, wherein the control unit (2), the database (3) and at least part of the apparatus (5) for creating the voice sequence are arranged in a tachograph (1), and a further part in a radio (20) or navigation unit (20) or PDA (20).

5. Device according to claim 4, **characterized in that** the information is displayed on the optical display medium (4).

6. Device according to either of claims 4 or 5, **characterized in that** the apparatus (5) for creating a voice sequence can be connected to a loudspeaker (8, 80) for output of the voice sequence.

## Revendications

1. Procédé de sortie d'informations au moyen d'un dispositif d'élaboration d'une séquence (5) vocale, le dispositif d'élaboration de la séquence (5) vocale comportant une unité d'élaboration d'une séquence (6, 50) de texte et/ou d'instruction et une autre unité de transformation de la séquence de texte et/ou d'instruction en une séquence (6, 50 ; 21, 22) vocale et l'unité et l'autre unité étant reliées entre elles ou pouvant être reliées entre elles par une interface, le dispositif étant relié à un dispositif (2) de contrôle, par lequel une pluralité d'instructions (24) peut être réalisée et la pluralité contient un certain nombre d'instructions de grande importance (34, 35) mémorisées dans une base (3) de données, un tachygraphe (1) étant présent, qui comporte au moins l'unité (2) de contrôle, la base (3) de données et une partie du dispositif d'élaboration de la séquence (5) vocale, qui comprend les stades suivants :
a) on donne à l'unité de contrôle instruction de sortir une information et on contrôle si l'instruction fait partie du certain nombre d'instructions (35) ;
b) on active le dispositif d'élaboration d'une séquence (5) vocale au moyen de l'instruction (35) appartenant au certain nombre, la séquence vocale contenant et/ou transcrivant l'information ;
c) on sort la séquence vocale.

2. Procédé suivant la revendication 1, **caractérisé en ce qu'**on représente l'information supplémentairement sur un support visuel d'affichage.

3. Procédé suivant l'une des revendications précédentes, **caractérisé en ce que** le certain nombre d'instructions (34, 35) comprend des messages d'avertissement.

4. Dispositif de sortie d'informations, qui comprend une unité (2) de contrôle ayant une pluralité d'instructions (24) qui donne instruction de sortir les informations et un support (4) visuel d'affichage pour la représentation d'informations et un certain nombre de la pluralité d'instructions est d'une grande importance (34, 35), dans lequel un dispositif d'élaboration d'une séquence (5) vocale est associé à l'unité de contrôle, dans lequel le dispositif d'élaboration de la séquence (5) vocale comprend une unité d'élaboration d'une séquence de texte et/ou d'instructions et est associé à une autre unité de transformation de la séquence de texte et/ou d'instructions en une séquence vocale et il y a un circuit (6) qui, sur la base d'une instruction, fait débuter une élaboration d'une séquence vocale lorsque l'instruction fait partie du certain nombre, la séquence vocale contenant et/ou transcrivant une information associée à l'instruction, **caractérisé en ce que** le dispositif comprend une base (3) de données dans laquelle le certain nombre de la pluralité d'instructions de grande importance (34, 35) sont mémorisées, l'unité (2) de contrôle, la base (3) de données et au moins une partie du dispositif d'élaboration de la séquence (5) vocale étant disposées dans un tachygraphe (1) et une autre partie étant disposée dans une radio (20) ou dans un appareil (20) de navigation ou dans un PDA (20).

5. Procédé suivant la revendication 4, **caractérisé en ce que** l'information est représentée sur le support (4) d'affichage visuel.

6. Procédé suivant l'une des revendications 4 ou 5, **caractérisé en ce que** le dispositif d'élaboration d'une séquence (5) vocale peut être relié à un haut-parleur (8, 80) de sortie de la séquence vocale.
